# EUROPÄISCHE PATENTSCHRIFT

(11) **EP 1 803 625 B1**
(45) Veröffentlichungstag und Bekanntmachung des Hinweises auf die Patenterteilung: **11.11.2009**
(21) Anmeldenummer: 06124460.4
(22) Anmeldetag: 21.11.2006
(51) Int. Cl.: B60W 50/08, B60K 35/00, G01D 7/08, G01D 7/10

(54) **Warnvorrichtung**
Warning device
Dispositif d'alerte

(30) Priorität: 27.12.2005 DE 102005062466
(43) Veröffentlichungstag der Anmeldung: 04.07.2007
(73) Patentinhaber: ROBERT BOSCH GMBH, 70442 Stuttgart (DE)
(72) Erfinder: Grabsch, Hans-Peter, 71034, Boeblingen (DE); Roßmeier, Markus, 56170, Benndorf (DE); Dorna, Michael, 74321, Bietigheim-Bissingen (DE)

(56) Entgegenhaltungen:
- WO-A-03/004299
- DE-A1- 19 539 799
- DE-A1- 19 847 611
- DE-A1- 19 940 723
- DE-C1- 19 959 597
- DE-U1- 29 710 675

## Beschreibung

Die Erfindung geht aus von einer Warnvorrichtung in einem Fahrzeug nach der Gattung des Hauptanspruchs. Es ist bereits bekannt, in einem Fahrzeug verschiedene Warnvorrichtungen einzusetzen, wobei die einzelnen Warnvorrichtungen jeweils eine eigene Warnung ausgeben. Hierbei ist es bekannt, gegebenenfalls die Ausgabe mehrerer Warnvorrichtungen beispielsweise in einem Anzeigeinstrument vor dem Fahrer in der Weise zusammenzufassen, dass ein Anzeigeinstrument zur Ausgabe der mehreren, verschiedenen Warnungen verwendet wird. Eventuell müssen diese Warnungen sequentiell ausgegeben werden.

Aus der DE 102 10 130 A1 ist ein Verfahren und eine Vorrichtung zur Fahrerwarnung bekannt, bei der die Größe.des erzeugten Warnsignals abhängig von der Wahrscheinlichkeit der Unaufmerksamkeit des Fahrers ist. Hierbei wird die Art des ausgegebenen Warnsignals in der Weise verändert, dass die Größe der Darstellung bzw. die Lautstärke und/oder die Tonhöhe eines akustischen Signals in Abhängigkeit von einer weiteren Fahrzeuggröße, beispielsweise der Fahrzeuggeschwindigkeit, variiert wird. Inhaltlich wird jedoch das gleiche Warnsignal ausgegeben.

Aus der gattungsbildenden DE 195 39 799 A1 ist eine Informationseinrichtung für Kraftfahrzeuge bekannt, die eine Verarbeitungseinrichtung aufweist, welche anzeigbare Informationssignale in Form von Symbolen in Abhängigkeit von Sensoren erfasst. Zur Erzielung eins großen Informationsgehaltes bei einer geringen Ablenkung des Fahrers erfolgt auf dem anzeigefeld eine Veränderung des dargestellten Symbols mindestens eines der Informationssignale in Beziehung auf dem betragsmäßigen Wert der zugehörigen Signale. Werden mehrere Informationen dargestellt, so werden diese in Abhängigkeit einer eingestellten Priorität sichtbar gemacht.

### Vorteile der Erfindung

Die erfindungsgemäße Warnvorrichtung und das erfindungsgemäße Verfahren zur Ausgabe einer Warnung gemäß den nebengeordneten Ansprüchen haben dem gegenüber den Vorteil, dass bei einem Anschlagen von zwei Warnsystemen zeitgleich nicht zwei Warnungen ausgegeben werden, die jeweils auf das einzelne Warnsystem bezogen sind, sondern dass diese beiden Warnungen durch eine Warnausgabe ersetzt wird, die sich von den beiden bisherigen Warnausgaben unterscheidet und die den Fahrer über beide Warnzustände gleichzeitig informiert. Entsprechend kann dem Fahrer auch eine Handlungsanweisung gegeben werden, die den Ursachen der beiden Warnzustände gleichzeitig entgegenwirkt. Vorteilhaft wird hierbei erreicht, dass der Fahrer insbesondere bei Zuständen des Fahrzeugs, die möglicherweise in mehrerer Hinsicht kritisch sind, nicht durch eine Vielzahl von Warnungen überfrachtet wird, so dass er entweder falsch, überhastet oder gar nicht mehr auf die Vielzahl von Warnungen in Form von Hinweisen auf kritische Zustände bzw. Handlungshinweise reagiert. Somit wird die Wahrnehmung von Warnungen im Fahrzeug verbessert und damit die Fahrsicherheit erhöht. Die Gesamtwarnung ist aus einer Richtungsinformation und einer Anweisung an den Fahrer zusammengeseht. Der Fahrer kann damit beispielsweise durch eine Anweisung "nach links lenken" unmittelbar auf die Warnung reagieren, ohne zunächst beispielsweise auf eine reine Feststellung des Warnsystems wie z.B. "Achtung Hindernis" erst selbst reagieren zu müssen und eine Handlung zu bestimmen.

Durch die in den Unteransprüchen aufgeführten Maßnahmen sind vorteilhafte Weiterbildungen und Verbesserungen der im Hauptanspruch angegebenen Warnvorrichtung möglich. Besonders vorteilhaft ist es, einen Speicher zum Speichern mehrerer Warnungsbestandteile vorzusehen, die in Abhängigkeit von den auftretenden Warnzuständen zu einer Gesamtwarnung zusammengesetzt werden können. Somit ist die Warnausgabe besonders flexibel und kann auf verschiedene Warnzustände und Fahrzeugzustände reagieren, ohne dass beispielsweise für eine akustische Ausgabe bereits für jeden Warnzustand des Fahrzeugs eine eigene Audionachricht bzw. eine eigene Warnung gespeichert sein muss. Weiterhin ist es vorteilhaft, neben dem reinen Warnzustand auch eine Richtungsinformation von dem Sensorsystem für eine Weiterverarbeitung und Auswertung zu übertragen. So kann z.B. dem Fahrer anstelle der Ausgabe "seitliches Hindernis" eine Information über ein Hindernis von rechts bzw. links ausgegeben werden.

Besonders vorteilhaft kann die erfindungsgemäße Warnvorrichtung für Systeme in einem Fahrzeug eingesetzt werden, die die Fahrzeugumgebung überwachen, auf die der Fahrer während seiner Fahrt stets reagieren muss.

Weiterhin ist es vorteilhaft für die Festlegung eines Warnzustandes unterschiedliche Grenzen für die beiden Fälle vorzusehen, dass ein oder mehrere in Zusammenhang stehende Warnsysteme sich in einem einen kritischen Bereich befinden. Die Toleranz kann somit für den Fall abgesenkt, dass auch ein anderes System kritische Daten meldet, so dass bei einer lediglich vermeintlich kritischen Situation nur eines Systems zur Vermeidung von Fehlalarmen eine Warnungsausgabe unterbleiben kann, bei einer kritischen Gesamtsituation jedoch eine frühzeitige Warnausgabe ermöglicht wird.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Warnvorrichtung,
Figur 2 einen Ablauf eines erfindungsgemäßen Verfahrens zur Ausgabe einer Warnung,
Figur 3 einen strukturellen Ablauf des erfindungsgemäßen Verfahrens zur Ausgabe einer Warnung.

### Beschreibung des Ausführungsbeispiels

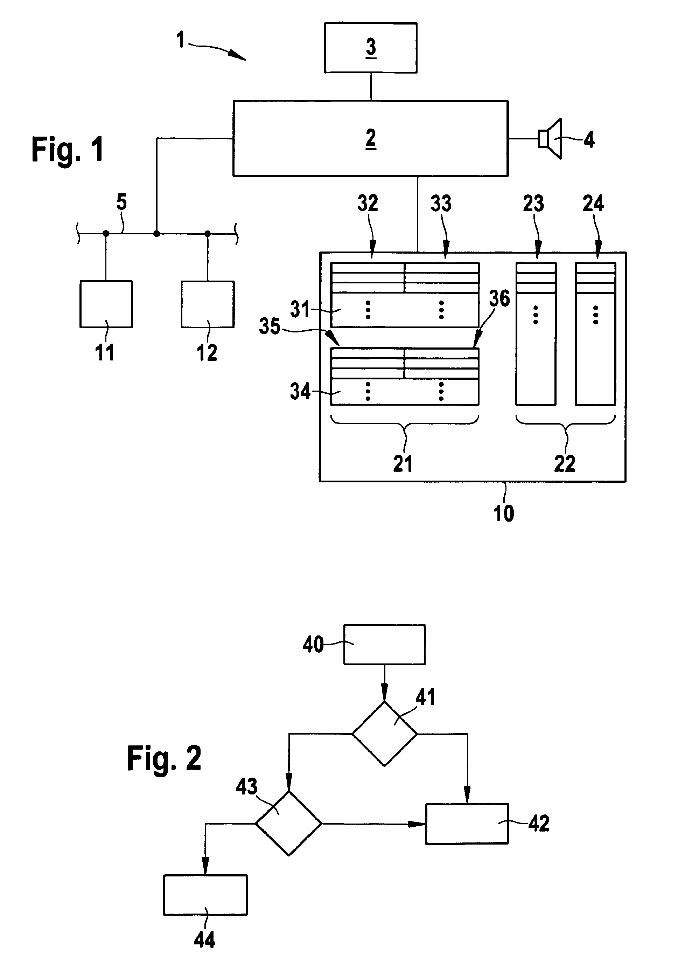

In der Figur 1 ist eine Warnvorrichtung 1 in einem Fahrzeug gezeigt. Die Warnvorrichtung 1 weist eine Recheneinheit 2 auf, an die eine Anzeige 3 und/oder eine Audioausgabe 4 angeschlossen sind. Die Anzeige 3 und/oder die Audioausgabe 4 dienen zur Ausgabe einer Warnung an einen Fahrer des Fahrzeugs. Unter eine Warnung soll hierbei nicht nur lediglich die Feststellung eines bestimmten Gefahrenzustandes für das Fahrzeug verstanden werden, sondern eine Warnung kann auch eine explizite Handlungsanweisung an den Fahrer umfassen, eine bestimmte Fahrhandlung oder eine Einstellung des Fahrzeugs vorzunehmen. An die Recheneinheit 2 ist ein Datenbus 5 angeschlossen, an den wiederum wenigstens ein erstes Sensorsystem 11 und ein zweites Sensorsystem 12 im Fahrzeug angeschlossen sind. Der Anschluss kann hierbei einerseits unmittelbar, andererseits aber auch über einen weiteren Datenbus erfolgen. Ferner können Sensorsysteme auch unmittelbar an die Recheneinheit 2 angeschlossen sein. Bei den Sensorsystemen handelt es sich beispielsweise um die folgenden Sensorsysteme:
Abstandswarneinrichtung (beispielsweise unter Nutzung von Ultraschallsensoren oder Radarsensoren), bei der ein Abstand zu einem Hindernis in einer Fahrzeugumgebung gemessen wird. Bei einem Unterschreiten eines Abstandes zu einem Hindernis wird eine Warnung ausgegeben.
Abstandsgeregeltes Folgefahren, bei dem eine Warnung beispielsweise dann ausgegeben wird, wenn der Fahrer in Folge einer starken Verzögerung des vorausfahrenden Fahrzeugs selbst wieder das Steuer übernehmen muss.

Spurverlassenswarnung, bei der ein Fahrer dann gewarnt wird, wenn das Fahrzeug eine beispielsweise über einen Videosensor erfasste Fahrspur vor dem Fahrzeug zu verlassen droht.

Tote-Winkel-Überwachung, bei der ein Fahrer dann gewarnt wird, wenn er z.B. durch eine Betätigung des Fahrzeugblinkers einen Spurwechsel anzeigt und eine Abstandsmesseinrichtung in einem Toten Winkel des Fahrzeugs ein anderes Fahrzeug erfasst.

Ein Kreuzungsassistent, mit dem z.B. das Überfahren einer roten Ampel oder eines Vorfahrtszeichens verhindert bzw. vor Fußgängern oder Fahrradfahrern im Kreuzungsbereich gewarnt wird.

Ferner ist es auch möglich, dass kritische Situationen des Fahrzeugs selbst erfasst werden, beispielsweise ein Ausfall eines technischen Systems, beispielsweise der Fahrzeugbremse, oder ein Überschreiten einer angemessenen Geschwindigkeit bzw. ein drohender Mangel von Treibstoff.

Die Sensorsysteme 11, 12 des Fahrzeugs melden der Recheneinheit 2 über den Datenbus 5 die entsprechenden, auftretenden kritischen Zustände des Fahrzeugs. Einerseits können dies einfache, digitale Informationen sein, beispielsweise "Tank leer" oder "vorausfahrendes Fahrzeug bremst". Je nach System ist es aber auch möglich, dass Informationen zusammen mit einer Richtungsinformation übertragen werden, beispielsweise "Hindernis links hinten" oder "Spurüberschreitung rechts". Bevorzugt werden von einem Sensorsystem nur Messdaten oder daraus abgeleitete Daten an die Recheneinheit 2 übertragen. Die dahingehende Auswertung, ob ein Warnzustand vorliegt, erfolgt nun durch die Recheneinheit 2. Hierbei können insbesondere auch fahrzeugspezifische Daten in der Recheinheit 2 abgelegt und für die Auswertung berücksichtigt werden. Unter der Übermittlung einer Warnung durch ein Sensorsystem, wie sie im Folgenden angegeben ist, können alle diese Meldungen verstanden werden.

Die übertragenen Informationen werden von der Recheneinheit 2 verarbeitet. Hierzu greift die Recheneinheit 2 auf einen Speicher 10 zu. Der Speicher 10 weist einen ersten Block 21 und einen zweiten Block 22 auf. Ein erster Teil 31 des ersten Blocks 21 umfasst dabei Warnzustände, denen jeweils in eindeutiger Weise ohne Einbeziehung anderer Warnzustände jeweils eine Warnmeldung zugeordnet ist. Gibt nur eines der Sensorsysteme 11, 12 eine Warnung aus, so wird aus einer ersten Menge von Einträgen 32 der entsprechende Warnzustand herausgesucht. In einer zweiten Menge 33 des ersten Teils 31 ist dem jeweiligen Warnzustand eine Warnausgabe zugeordnet. Diese Warnausgabe ist ein Zeiger auf eine oder mehrere Positionen in dem zweiten Block 22 des Speichers 10. Der zweite Block 22 weist hierbei eine erste Menge 23 und eine zweite Menge 24 von Warnausgaben auf. Die erste Menge 23 umfasst dabei Richtungsinformationen, die zweite Menge 24 Handlungsinformationen. Es können auch weitere Mengen von Warnungen in dem zweiten Block 22 des Speichers 10 abgelegt sein.

Wird beispielsweise von einem System zum abstandsgeregelten Folgefahren festgestellt, dass ein vorausfahrendes Fahrzeug stark verzögert, so wird der entsprechende Eintrag in der ersten Menge 32 in dem ersten Teil 31 des ersten Blocks 21 herausgesucht. In der zweiten Menge 33 ist ein entsprechender Zeiger auf eine Warnausgabe in dem zweiten Block 22 diesem Warnzustand zugeordnet. Da in diesem Fall eine Richtungsinformation aus der ersten Menge 23 nicht erforderlich ist, wird lediglich eine Information aus der zweiten Menge 24 zugeordnet, beispielsweise "bitte bremsen".

Diese Warnung ist nicht Teil der beanspruchten Erfindung.

Dem zweiten Teil 34 des ersten Blocks 21 des Speichers 10 sind Warnungen zugeordnet, bei denen wenigstens zwei Warnsysteme einen Warnzustand melden. Hierzu wird im Folgenden das Verfahren zur Warnausgabe anhand der Figur 2 erläutert.

Ausgehend von einem Warnzustand 40 wird zu einem ersten Prüfungsschritt 41 weiterverzweigt. In dem ersten Prüfungsschritt 41 wird überprüft, ob nur ein Warnsystem angeschlagen hat oder ob mehrere Warnsysteme einem Warnzustand entsprechende Daten übermitteln. Für den Fall, dass nur ein erstes Warnsystem angeschlagen hat, wird zu einem ersten Ausgabeschritt 42 verzweigt, in dem wie bereits oben anhand der Figur 1 erläutert, eine Warnung aus dem zweiten Block 22 herausgesucht und über die Anzeige 3 bzw. die Audioausgabe 4 ausgegeben wird. Wird dagegen in dem ersten Prüfschritt 41 festgestellt, dass mehrere Warnsysteme angeschlagen haben, so wird zu einem zweiten Prüfschritt 43 verzweigt. In dem zweiten Prüfschritt 43 wird überprüft, ob in dem zweiten Teil 34 des ersten Blocks 21 für den Fall eines Alarms beider Warnsysteme ein Eintrag existiert. Handelt es sich hierbei um Warnsysteme, die nichts miteinander zu tun haben, beispielsweise eine Tankfüllstandsüberwachung und ein Überwachung eines Verlassens der Fahrspur, so wird zu dem ersten Ausgabeschritt 42 verzweigt. Nacheinander werden nun gegebenenfalls nach einer in der zweiten Menge 33 für die Ausgabe vorgegebenen Priorisierung festgelegten Reihenfolge die Warnungen ausgegeben. Wird dagegen in dem zweiten Prüfschritt 43 festgestellt, dass ein Eintrag in dem zweiten Teil 34 existiert, so wird dieser Eintrag, der in einer ersten Menge 35 des zweiten Teils 34 des ersten Blocks 21 abgelegt ist, aufgerufen und es wird ein entsprechender Zeiger in einer zweiten Menge 36 auf eine Warnausgabe in dem zweiten Block 22 ermittelt und in einem zweiten Ausgabeschritt 44 ausgegeben. Entsprechend dem jeweiligen Zeiger wird hierbei aus einzelnen Meldungen in dem zweiten Block 22 eine entsprechende, neue Warnmeldung zusammengesetzt.

In einer weiteren Ausführungsform kann auch in den beiden Mengen 33 und 36 jeweils die auszugebende Warnmeldung selbst abgelegt sein.

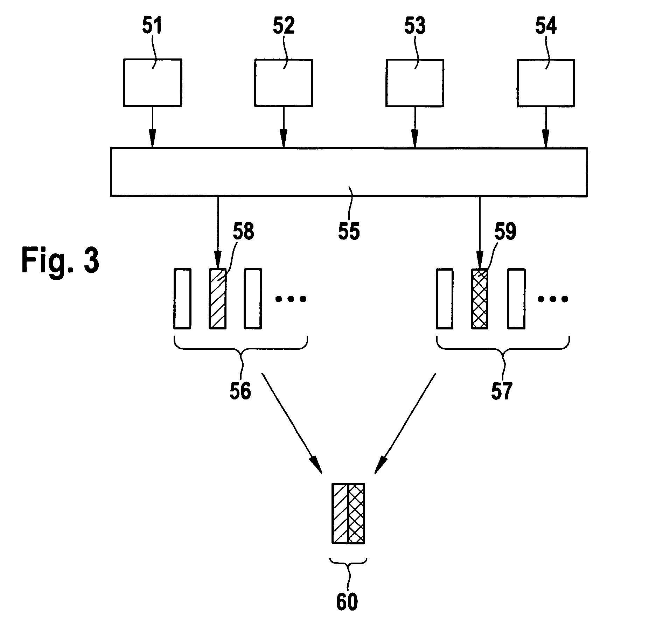

Das Verfahren wird anhand der Figur 3 nochmals am Beispiel von mehreren Sensorsystemen an einem Fahrzeug erläutert. In einem Blockschaltbild sind schematisch ein abstandsgeregeltes Folgefahren 51, eine Spurverlassenwarnung 52, eine Tote-Winkel-Überwachung 53 und ein Kreuzungsassistent 54, der einem Fahrer Anweisungen zum Durchfahren eines Kreuzungsbereichs gibt, im Fahrzeug vorgesehen. Die Warninformationen der genannten Systeme werden gemeinsam in einer Verarbeitungsstufe 55 vorzugsweise durch die Recheneinheit 2 verarbeitet. Aus einer ersten Menge 56 von Richtungsinformationen und einer zweiten Menge 57 von Handlungshinweisen wird je nach einem Zustand eine bestimmte Richtungsinformation 58 und eine Handlungsanweisung 59 herausgesucht und zu einer Gesamtwarnung 60 zusammengesetzt und ausgegeben. Hätte nur eines der beiden Warnsysteme angeschlagen wäre jeweils eine andere Warnung als die zusammengesetzte Warnung 60 ausgegeben worden.

Wir z.B. von der Spurverlassenswarnung festgestellt, dass der Abstand zum linken Fahrbahnrand zu gering ist und liegt keine andere Meldung vor, so wird eine Anweisung ausgegeben, die sich aus der Handlungsanweisung "lenken nach" und der Richtungsinformation "rechts" zusammensetzt. Tritt zusätzlich noch der Warnzustand auf, dass ein Objekt in einem Toten Winkel auf der linken Seite erkannt wird, so ändert sich die Anweisung an den Fahrer nicht. Denn auch in diesem Fall muss er nach rechts lenken. Jedoch werden nicht zwei Informationen an den Fahrer ausgegeben, nämlich einerseits "nach rechts lenken" und andererseits "Objekt im Toten Winkel". Für den Fall, dass ein Objekt in einem Toten Winkel erkannt wird und andererseits das abstandsgeregelte Folgefahren ein vorausfahrendes Fahrzeug erkennt, wird beispielsweise die Meldung "Geschwindigkeit reduzieren, nicht lenken nach links" ausgegeben. Der Fahrer muss in diesem Fall zwei unabhängige Hinweise beachten, so dass eine Zusammenfassung nicht möglich ist. Für den Fall, dass gleichzeitig der Abstand zu einem vorausfahrenden Objekt kritisch ist, der Abstand zu einem Fahrbahnrand rechts kritisch ist und ein Objekt im Toten Winkel erkannt wird, wird beispielsweise die Meldung "Geschwindigkeit reduzieren und Spur halten" ausgegeben. Die Anwesenheit von drei Ereignissen führt in diesem Fall zu der geänderten Ausgabe von Hinweisen an den Fahrer.

Wird beispielsweise nur ein Verlassen der Fahrbahn detektiert, so wird lediglich die Information "Spur halten" ausgegeben. Wird zusätzlich ein Objekt in einem Toten Winkeln beispielsweise auf der linken Seite erkannt, wird dem Fahrer" nicht nach links lenken" ausgegeben. Wird beispielsweise nur ein Objekt in einem Toten Winkel erkannt, so wird dem Fahrer lediglich die Information "Objekt links im Toten Winkel" ausgegeben. Wird ein Objekt vor dem Fahrer erkannt, so kann der Fahrer die Information "dem Objekt ausweichen" ausgegeben werden, wenn kein Fahrzeug im Toten Winkel ist.

Wird zusätzlich neben dem Hindernis vor dem Fahrzeug ein Objekt im Toten Winkel erkannt, so wird an den Fahrer die Anweisung "Geschwindigkeit reduzieren" und gegebenenfalls auch noch der Hinweis "Spur halten" ausgegeben.

In einer weiteren Ausführungsform ist es auch möglich, dass für ein Feststellen eines Warnzustands nur eines einzelnen Warnsystems und für ein Feststellen eines Warnzustands mehrerer Warnsysteme gleichzeitig unterschiedliche Schwellwerte festgelegt sind. So kann die Ausgabe einer gemeinsamen Warnung für mehrere Systeme bereits dann erfolgen, wenn beide Systeme jeweils einen ersten Schwellwert erreicht haben, aber noch keines der Systeme einen zweiten Schwellwert erreicht hat, ab dem für das jeweilige Einzelsystem ein Warnung ausgegeben würde. Wird beispielsweise überwacht, ob ein Fahrzeug in der Spur fährt, so wird ohne einen Warnzustand einer Toten-Winkel-Überwachung z.B. erst dann eine Warnung ausgegeben, wenn eine Fahrbahnmarkierung befahren oder überschritten wird. Nähert sich das Fahrzeug nicht der Fahrbahnmarkierung an, wird im Allgemeinen keine Warnung vor einem Objekt im toten Winkel ausgegeben. Befindet sich allerdings ein Objekt im toten Winkel, so wird eine Warnung bereits dann ausgegeben, wenn sich ein Fahrzeug bis auf 15 cm der Fahrbahnmarkierung angenähert hat, um dem Fahrer rechtzeitig eine Möglichkeit zur Handlung zu geben.

## Patentansprüche

1. Warnvorrichtung in einem Fahrzeug, wobei die Warnvorrichtung mit wenigstens zwei Sensorsystemen (11, 12) im Fahrzeug verbunden ist, mit einer Recheneinheit (3) zur Auswertung von Daten der Sensorsysteme und zur Veranlassung einer Ausgabe einer Warnung, wobei für den Fall, dass eines der Sensorsysteme (11, 12) Daten übermittelt, die einem Warnzustand entsprechen, eine dem jeweiligen Sensorsystem zugeordnete Warnung ausgegeben wird, wobei für den Fall, dass zwei Sensorsysteme (11, 12) beide jeweils für den gleichen Zeitraum Daten übermitteln, die jeweils einem Warnzustand entsprechen, eine dem gleichzeitigen Auftreten der Warnzustände zugeordnete Warnung anstelle von Wamzuständen der einzelnen Sensorsystemen jeweils alleine zugeordneten Warnungen ausgegeben wird, die jeweils auf das einzelne Warnsystem bezogen sind, **dadurch gekennzeichnet, dass** die dem gleichzeitigen Auftreten der Warnzustände zugeordnete Warnung eine Handlungsanweisung ist, die den Ursachen der beiden Warnzustände gleichzeitig entgegenwirkt und die aus einer Richtungsinformation und einer Anweisung an den Fahrer zusammengesetzt ist.

2. Warnvorrichtung nach Anspruch 1, **gekennzeichnet durch** einen Speicher (10) zum Speichern mehrer Warnungsbestandteile zu einem variablen Zusammensetzen der Warnungsbestandteile (58, 59) zu einer Gesamtwarnung (60).

3. Warnvorrichtung nach Anspruch 2, **dadurch gekennzeichnet, dass** der Speicher (10) zum Zusammensetzen der Warnungsbestandteile wenigstens eine erste Menge (23) von Warnungsbestandteilen mit Richtungsinformationen und wenigstens eine zweite Menge (24) von Warnungsbestandteilen mit Anweisungen aufweist.

4. Warnvorrichtung nach einem der vorhergehenden Ansprüche, **dadurch gekennzeichnet, dass** die Sensorsysteme eine Tote-Winkel-Überwachung (53), eine Spurverlassenswarnung (52), eine Überwachung des Abstandsgeregelten Folgefahrens (51) und/oder einen Kreuzungsassistent (54) umfassen.

5. Verfahren zur Ausgabe einer Warnung in einem Fahrzeug, wobei wenigstens zwei Sensorsysteme im Fahrzeug überwacht werden und wobei eine dem jeweiligen Sensorsystem zugeordnete Warnung für den Fall ausgegeben wird, dass das jeweilige Sensorsystem einem Warnzustand entsprechende Daten erfasst, wobei für den Fall, dass die wenigstens zwei Sensorsysteme beide einem Warnzustand entsprechende Daten erfassen, eine dem gleichzeitigen Auftreten der Warnzustände zugeordnete Warnung anstelle von Warnzuständen der einzelnen Sensorsystemen jeweils alleine zugeordneten Warnungen ausgegeben wird, die jeweils auf das einzelne Warnsystem bezogen sin, **dadurch gekennzeichnet, dass** als bei dem dem gleichzeitigen Auftreten der Warnzustände zugeordnete Warnung eine Handlungsanweisung ausgegeben wird, die den Ursachen der beiden Warnzustände gleichzeitig entgegenwirkt und die aus einer Richtungsinformation und einer Anweisung an den Fahrer zusammengesetzt ist.

6. Verfahren nach Anspruch 5, **dadurch gekennzeichnet, dass** die ausgegebenen Warnungen aus einer Mehrzahl vorgegebener Warnungsbestandteile zu einer Gesamtwarnung zusammengesetzt werden.

## Claims

1. Warning device in a vehicle, wherein the warning device is connected to at least two sensor systems (11, 12) in the vehicle, having a computing unit (3) for evaluating data of the sensor systems and for causing a warning to be output, wherein, if one of the sensor systems (11, 12) transmits data which corresponds to a warning state, a warning which is associated with the respective sensor system is output, wherein, if two sensor systems (11, 12) both respectively transmit data which corresponds to a warning state for the same time period, a warning which is assigned to the simultaneous occurrence of the warning states is output instead of warnings which are respectively individually assigned to warning states of the individual sensor systems and which are respectively related to the individual warning system, **characterized in that** the warning which is assigned to the simultaneous occurrence of the warning states is an action instruction which counteracts the causes of the two warning states simultaneously and which is composed of a direction information item and an instruction to the driver.

2. Warning device according to Claim 1, **characterized by** a memory (10) for storing a plurality of warning components to form a variable combination of the warning components (58, 59) to produce a composite warning (60).

3. Warning device according to Claim 2, **characterized in that** the memory (10) has, for the purpose of combining the warning components, at least a first set (23) of warning components with direction information and at least a second set (24) of warning components with instructions.

4. Warning device according to one of the preceding claims, **characterized in that** the sensor systems comprise a blind spot monitoring system (53), a lane-departure warning system (52), a means for monitoring the distance-controlled following-mode driving (51) and/or an intersection assistant (54).

5. Method for outputting a warning in a vehicle, wherein at least two sensor systems are monitored in the vehicle, and wherein a warning which is assigned to the respective sensor system is output if the respective sensor system senses data corresponding to a warning state, wherein, if the at least two sensor systems both acquire data corresponding to a warning state, a warning which is assigned to the simultaneous occurrence of the warning states is output instead of warnings which are respectively individually assigned to warning states of the individual sensor systems and which are respectively related to the individual warning system, **characterized in that** an action instruction which counteracts the causes of the two warning states simultaneously and which is composed of a direction information item and an instruction to the driver is output as a warning which is assigned to the simultaneous occurrence of the warning states.

6. Method according to Claim 5, **characterized in that** the warnings which are output are composed of a plurality of predefined warning components for producing a composite warning.

## Revendications

1. Dispositif d'avertissement installé dans un véhicule, le dispositif d'avertissement étant relié à au moins deux systèmes (11, 12) de détecteurs prévus dans le véhicule et à une unité de calcul (3) qui évalue les données des systèmes de détecteurs et qui lance l'émission d'un avertissement,
un avertissement associé à un des systèmes de détecteurs concerné étant émis dans le cas où ce système (11, 12) de détecteurs transmet des données qui correspondent à une situation d'avertissement et un avertissement associé à l'apparition simultanée de situations d'avertissement étant émis au lieu des avertissements associés séparément aux situations d'avertissement des systèmes de détecteurs associés à chaque système d'avertissement respectif dans le cas où les deux systèmes (11, 12) de détecteurs transmettent tous deux pendant le même intervalle de temps des données qui correspondent chaque fois à une situation d'avertissement,
**caractérisé en ce que**
l'avertissement associé à l'apparition simultanée des situations d'avertissement est une indication de manoeuvre qui s'oppose simultanément aux causes des deux situations d'avertissement et qui est constituée d'une information de direction et d'une instruction au conducteur.

2. Dispositif d'avertissement selon la revendication 1, **caractérisé par** une mémoire (10) qui conserve plusieurs composantes d'avertissement pour composer différemment les composantes d'avertissement (58, 59) en vue de former un avertissement global (60).

3. Dispositif d'avertissement selon la revendication 2, **caractérisé en ce que** la mémoire (10) qui rassemble les composantes d'avertissement présente une première quantité (23) de composantes d'avertissement qui contiennent des informations de direction et au moins une deuxième quantité (24) de composantes d'avertissement qui présentent des instructions.

4. Dispositif d'avertissement selon l'une des revendications précédentes, **caractérisé en ce que** les systèmes de détecteurs comprennent une surveillance (53) d'angle mort, un avertissement (52) que la voie de circulation a été quittée, une surveillance (51) du suivi des autres véhicules à distance régulée et/ou un assistant de croisement (54).

5. Procédé d'émission d'un avertissement dans un véhicule, dans lequel au moins deux systèmes de détecteurs prévus dans le véhicule sont surveillés et un avertissement associé à chaque système de détecteurs est émis dans le cas où le système de détecteurs concerné saisit des données qui correspondent à une situation d'avertissement, un avertissement associé à l'apparition simultanée de situations d'avertissement étant émis au lieu d'avertissements associés séparément aux situations d'avertissement des systèmes de détecteurs associés aux systèmes d'avertissement respectifs dans le cas où les deux ou plusieurs systèmes de détecteurs saisissent des données qui correspondent chaque fois à une situation d'avertissement,
**caractérisé en ce que**
comme avertissement associé à l'apparition simultanée des situations d'avertissement, une indication de manoeuvre qui s'oppose simultanément aux causes des deux situations d'avertissement et qui est constituée d'une information de direction et d'une instruction au conducteur est émise.

6. Procédé selon la revendication 5, **caractérisé en ce que** les avertissements émis sont constitués de plusieurs composantes prédéterminées d'avertissement pour former un avertissement global.
